# EUROPEAN PATENT SPECIFICATION

(11) **EP 3 533 266 B1**
(45) Date of publication and mention of the grant of the patent: **27.01.2021**
(21) Application number: 17791049.4
(22) Date of filing: 24.10.2017
(51) Int. Cl.: H04W 72/04, H04W 72/12

(54) **TECHNIQUE FOR COMMUNICATING CONTROL INFORMATION**
VERFAHREN ZUR ÜBERMITTLUNG VON STEUERINFORMATIONEN
TECHNIQUE DE COMMUNICATION D'INFORMATIONS DE COMMANDE

(30) Priority: 26.10.2016 US 201662413194 P
(43) Date of publication of application: 04.09.2019
(73) Proprietor: Telefonaktiebolaget LM Ericsson (publ), 164 83 Stockholm (SE)
(72) Inventor: CARLSSON, Anders, 222 40 Lund (SE); ASHRAF, Shehzad Ali, 52064 Aachen (DE); PARKVALL, Stefan, 167 57 Bromma (SE); BALDEMAIR, Robert, 170 69 Solna (SE)
(74) Representative: Ericsson
(86) International application number: PCT/EP2017/077162
(87) International publication number: WO 2018/077877

(56) References cited:
- US-A1- 2016 128 028
- HUAWEI ET AL: "Details of two-level DCI schemes for short TTI", 3GPP DRAFT; R1-1608634, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051148693, Retrieved from the Internet: URL:http://www.3gpp.org/ftp/Meetings_3GPP_ SYNC/RAN1/Docs/ [retrieved on 2016-10-09]
- INTEL CORPORATION: "DCI formats for shorten TTI", 3GPP DRAFT; R1-1609485, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 1 October 2016 (2016-10-01), XP051159555, Retrieved from the Internet: URL:http://www.3gpp.org/ftp/tsg_ran/WG1_RL 1/TSGR1_86b/Docs/ [retrieved on 2016-10-01]

## Description

### TECHNICAL FIELD

The present disclosure generally relates to a technique for communicating control information. More specifically, and without limitation, methods and devices are provided for transmitting and receiving control information in a radio network.

### BACKGROUND

Control information in a radio network according to Third Generation Partnership Project (3GPP) Long Term Evolution (LTE), such as information about a future transmission of data, is transmitted to a user equipment (UE) over dedicated channels, e.g., a Physical Downlink Control Channel (PDCCH) or an Enhanced PDCCH (ePDCCH). Such information is referred to as Downlink Control Information (DCI).

Some components of the control information may change for every new data transmission. Other components change only with the physical location of the UE or in response to changing channel conditions for the data transmission. For example, it is not uncommon that only a packet number or a redundancy version encoded in the DCI changes between subsequent transmissions.

Document US 2016/128028 A1 describes techniques for wireless communication employing two-stage control channel messaging. The physical downlink control channel (PDCCH) carries a downlink control information (DCI) flag and DCI format size indicator. An example method of wireless communication at a wireless device includes receiving, at a first bandwidth and during a transmission time interval (TTI), a first control channel message. In addition, the example method includes determining, based on a flag in the first control channel message, whether a second control channel message is present in the TTL. Furthermore, the example method includes receiving, at a second bandwidth, the second control channel message where the flag indicates that the second control channel message is present for the TTL.

The 3GPP document R1-1608634 describes details of two-level DCI schemes for short TTI (sTTI). The DCI is divided into two parts. The first part, named as slow DCI, includes the part of the control information, which is transmitted at subframe level. The second part, named as fast DCI, includes the rest of the control information, which has to be transmitted in each scheduled sTTI. A UE that is sTTI-capable needs to detect both the slow DCI and fast DCI in order to obtain the complete scheduling information for each sTTI.

The 3GPP document R1-1609485 describes DCI formats for sTTI and different signaling methods for realizing sTTI scheduling. A two-stage DCI formats can effectively reduce DL control overhead while still providing the desired scheduling flexibility for resource allocation. The two-level DCI formats are introduced by splitting legacy scheduling information into two parts and transmitting them on legacy PDCCH and short PDCCH (sPDCCH), respectively. A fast DCI format is carried by sPDCCH and transmitted within each sTTI to provide sufficient flexibility for resource allocation. The slow DCI format is transmitted in the common search space or a UE-group-specific search space on the PDCCH given by a dedicated radio network temporary identifier (RNTI). Resources are split within a pre-allocated resource block (RB) region for short PDSCH (sPDSCH) with a reduced resource allocation field size in DCI format. The presence of demodulation reference signals (DMRS) in a sTTI and the size of the sPDCCH region in the sPDCCH symbols are signaled in the fast DCI format.

In existing radio networks, the rate of transmitting control information (e.g., the above-mentioned fast DCI) is determined by the most frequently changing component of the control information. Since the radio network provides radio access to many UEs, the repetition of slowly changing data transmission parameters, i.e. control information, wastes spectral resources and, therefore, reduce the capacity of the control channel available to other UEs. Particularly, as the number and variance of connected devices increases even faster than the increasing demand for data throughput, the control channel capacity becomes a factor that limits the number of connected devices.

### SUMMARY

Accordingly, there is a need for a technique that uses the control channel capacity in a radio network more efficiently.

The invention is defined by the appended independent claims. Further examples of the invention are set forth in the dependent claims.

As to one aspect, a method of transmitting control information in a radio network from a first station to a second station is provided. The control information is indicative of a plurality of parameters for a radio communication involving at least the second station. The method comprises or triggers a step of determining an entry of a table, wherein the entry is indicative of at least one of the parameters of the control information; and a step of transmitting, to the second station, a reference to the entry of the table and supplementary information, wherein the entry and the supplementary information are jointly indicative of the plurality of parameters of the control information.

Embodiments of the technique reduce radio resource wastage and, hence, increase control channel capacity by referring to the table for at least parts of the control information. Instead of retransmitting the entire control information to schedule the radio communication (e.g., a data transmission) the first station transmits a compact control information including the reference and the supplementary information.

The technique can be embodied to handle parts of control information that changes rapidly (e.g., with every radio communication or new data transmission) in the supplementary information differently from control information that changes less frequently (e.g., changing only in specific conditions, such as channel condition, etc.) in the table. Thus, control information can be transmitted with different time scales in a radio network without disintegrating the control information transmission.

A naive approach may transmit different parameters at different times, e.g., whenever individual parameters are changed. The technique does not require transmitting the parameters separately or at different rates. The technique allows maintaining the integrity of the control information. The plurality of parameters related to the same radio communication can become available at the second station at the same time. This allows reducing the complexity of a radio interface at the second station. Alternatively or in addition, power consumption of the first station and/or the second station can be reduced by reducing the on-time or duty factor of the radio interface for radio transmission and radio reception, respectively.

Each transmission of the control information may be part of an individual control message. A control message including the compact control information may be referred to as a compact control message.

Furthermore, each entry of the table may be indicative of a combination of at least two different parameters. For example, the entry may represent those parameters that control radio options that the second station does not use, e.g., because of a specific service or application performed by the second station or because of hardware capabilities of the second station. The technique can effectively eliminate parameters for radio options that are not used by a specific type of second station, so that the control signaling load in the radio network does not increase as the variance of second stations in the radio network increases.

Being "indicative" of a parameter may encompass that a value is specified for said parameter.

The expression "table" may encompass any collection of entries. The entries can be stored in a memory. The table does not require a specific structure. By way of example, and not limitation, the entries may be sequentially stored in the memory, stored in an array of entries of predefined size or linked by pointers.

The first station may perform or trigger the steps of the method aspect. The technique can be embodied to handle the control information in the radio network. The radio network may include a land-mobile radio system, e.g., according to 3GPP Long Term Evolution (LTE), LTE-Advanced, New Radio (NR) or 5^{th} Generation (5G).

The control information may encompass any information that is not payload data. The control information may include radio-channel control information. The parameters of the control information may include a control command and/or control settings.

The table may be a cache (e.g., a buffer storage) for control information, may be pre-configured (e.g., initialized), updated (e.g., configured by transmitting control information) and/or pre-defined (e.g., by a standard setting). Each entry of the table may include cached, configured and/or pre-defined control information.

The compact control information may contain, e.g., in the supplementary information, updated control parameters (e.g., a redundancy version or a new-data indicator, etc.) so that the control information at the second station is up-to-date. Moreover, the transmitted control information may be the basis for updating the table, e.g., by adding or replacing entries in the table. The table may be optimized for a current control scenario. An instance of the table at the second station may be maintained based on the compact control information.

The reference may identify or point to one of the entries in the table. The reference may be implemented by a cryptographic checksum or an index.

The supplementary information may explicitly include a parameter value for at least one of the parameters. For example, the supplementary information may include a parameter identifier of at least one of the parameters and a parameter value of the parameter identified by the parameter identifier. In case the entry is also indicative of the parameter identified in the supplementary information, the parameter value of the supplementary information may be indicative of the parameter according to the control information. In other words, in the combination of the reference and the supplementary information, the supplementary information may be decisive in case of redundant or contradictory information.

The combination of the reference and the supplementary information may be referred to as compact control information. A number of bits included in the compact control information for the reference to the entry (e.g., the base 2 logarithm of the number of entries in the table) may be less than a number of bits representing the entry (e.g., the number of bits representing the value of the at least one parameter). The plurality of parameters may be explicitly represented by 40 to 100 bits of information. The compact control information may be represented by less than half of the bits for explicitly represented the plurality of parameters.

If the transmission of the compact control information fails, the transmission may be repeated by sending along control information that is explicitly indicative of the plurality of parameters.

The reference to the entry may include an index. The index may be configured to uniquely identify the entry in the table. Alternatively or in addition, the reference to the entry may include a hash value or a checksum of the control information, parts of the control information and/or the entry.

In the case of entries each being indicative of the plurality of parameters for the control information, the supplementary information may modify (e.g., overwrite) at least one of the parameters. Otherwise, the supplementary information may modify and/or complement parameters.

The number of entries in the table may be less than the power of two of a bit length of the checksum. The checksum may be computed based on the plurality of parameters of the control information. The checksum may be a remainder of a binary or polynomial division of the control information, e.g., as represented by the plurality of parameters of the control information.

The table may be stored at the second station and/or accessible to the second station. It is not necessary that the first station maintains or accesses an instance of the table. Alternatively, the table may be shared between the first station and the second station. For example, each of the first and second stations may include or maintain an instance of the table.

The table may be predefined. For example, the first station and/or the second station may comprise an initial setting of the table, e.g., as a factory setting or set at deployment, e.g., in firmware. The table may be initialized or fixedly defined, e.g., according to a technical standard. Alternatively or in addition, the table is initialized or fixedly defined dependent on hardware capabilities of the second station.

Alternatively or in addition, the table may be transmitted (e.g., broadcasted), partly or completely, from the first station to (at least) the second station prior to transmitting the compact control information. The table may be transmitted by Radio Resource Control (RRC) or Layer 3 (L3) signaling. The table may be transmitted when the second station enters an RRC connected state (e.g., at RRC connection setup and/or RRC connection reconfiguration).

The method may further comprise or trigger a step of initializing and/or modifying an instance of the table at the second station, e.g., for consistency with an instance of the table at the first station. The method may comprise or trigger the step of transmitting, to the second station, commands for initializing or modifying the instance of the table at the second station. The table may be initialized or modified by RRC signals transmitted to the second station. Alternatively or in addition, the table may be dynamically initialized or modified using Layer 1 (L1) and/or Layer 2 (L2) control signaling.

The instance of the table at the second station may be initialized upon the second station entering a wirelessly connected state (e.g., an RRC connected state) with the first station. The instance of the table at the second station may be modified based on a previous transmission of control information and/or in response to a modification of the instance of the table at the first station.

Alternatively or in addition, the table may include, partly or completely, previously transmitted control information. The table may include entries each being indicative of at least one parameter of previously transmitted control information. Some or all of the entries in the table may be indicative of at least one parameter of previously transmitted control information. For example, different entries may store the at least one parameter of different previous transmissions of the control information. Storing some or all parameters of previously transmitted control information is also referred to as cached control information. For example, the table may include a history of previously transmitted control information.

The previously transmitted control information may be stored in the table until a maximum number is reached. The oldest entry in the table may be replaced for storing further transmitted control information. If all parameters of previously transmitted control information is stored in the entry, the supplementary information is used to modify the corresponding entry so as to correspond to the control information.

The instance of the table at the second station may be gradually initialized or filled based on previously transmitted long control information. For example, the instance of the table at the second station may be initially empty. The previously transmitted control information stored in the table may include control information transmitted as long control information or compact control information. Each entry of previously transmitted control information may include the at least one parameter of the transmitted control information.

Alternatively or in addition, the first station may include a flag (e.g., one bit). Setting the flag may trigger the second station to enter the corresponding control information in its instance of the table. The flag may be referred to as a contain-me-bit.

An entry indicative of at least one parameter of previously transmitted control information is entered into the table responsive to determining that the previously transmitted control information has been successfully received at the second station. E.g., an entry may be created in response to successfully transmitting a message including the control information.

The first station may determine that the control information has been successfully received at the second station based on the second station performing the radio communication according to the control information or based on an acknowledgment for the control information received from the second station.

The second station may determine that the control information has been successfully received from the first station based on uniquely identifying the entry using the reference, based on successfully performing the radio communication according to the control information or based on a checksum for the control information received from the first station.

Optionally, each entry of previously transmitted control information may include a time of creating the entry, a time for the most recent usage of the entry (e.g., by transmitting the reference to the corresponding entry) and/or a usage counter that is incremented at each usage of the entry.

An entry indicative of at least one parameter of previously transmitted control information may be deleted from the table upon expiry of a timer for the corresponding entry. The timer may be started upon entering the entry into table. The timer may be reset upon usage of the entry for transmitting the compact control information. An expiry time after which the timer expires may depend on the frequency of the usage.

The entry may be indicative of more bits of the control information than the number of bits of the supplementary information. Alternatively or in addition, the entry may be indicative of more parameters of the control information than the supplementary information is indicative of. The entry may cover more than half (e.g., in terms of bits or number of parameters) of the control information. Alternatively or in addition, the entry may be indicative of a number of bits of the control information equal to or less than the number of bits of the supplementary information.

The supplementary information may include complementary information and/or modifying information. The supplementary information is indicative of one or more parameters of the control information other than the at least one parameter of which the entry is indicative. Alternatively or in addition, the supplementary information may be indicative of a modification of one or more parameters of which the entry is indicative.

Updated versions of the control information may be transmitted. The method may be performed for each of the updated versions. At least one parameter indicated by the entry may be updated less frequently than at least one parameter indicated by the supplementary information.

The control information may be transmitted periodically. For example, the control information may be transmitted in consecutive Transmission Time Intervals (TTIs) and/or consecutive subframes, e.g. every millisecond. More specifically, the control information may be encoded in the first 3 transmission symbols (e.g., Orthogonal Frequency Division Multiplexing ((OFDM) symbols) of a subframe. Alternatively or in addition, the transmission of the control information may be triggered by an event. For example, the control information may grant radio resources in response to a buffer status report of the second station.

The control information, e.g., at least one of the parameters, may be indicative of at least one of a radio resource allocation (e.g., a frequency allocation and/or a time allocation), a modulation and coding scheme (MCS), e.g., a modulation scheme and/or a coding rate), a power control command, a request for reporting channel state information (CSI), e.g., a channel quality indicator, (CQI), a precoding matrix indicator, (PMI), and/or a rank indicator (RI), a packet sequence number, a new data indicator and a redundancy version (RV) in response to a Hybrid Automatic Repeat Request (HARQ).

At least one parameter indicated by the entry may be indicative of at least one of a radio resource allocation, a modulation and coding scheme, an antenna configuration, a demodulation reference signal configuration and a transmission mode. At least one parameter indicated by the supplementary information may be indicative of at least one of a packet sequence number, a redundancy version, a new data indicator, a power control command and a request for reporting channel state information.

The entry may be determined based on at least one parameter of the entry matching the at least one parameter of the control information. E.g., the first station may look for the entry coming closest to the control information to be transmitted. Alternatively or in addition, the determined entry may minimize the number of bits required for the supplementary information under the condition that entry and supplementary information are jointly indicative of the plurality of parameters of the control information.

For a parameter that can assume a plurality of parameter values (which may be referred to as a complex parameter), the table may include entries each indicative of one of the parameter values out of a strict subset of the plurality of parameter values. The technique can reduce the control channel capacity occupied for transmitting the control information including the complex parameter. For example, the strict subset may be tailored for, or specific to, the second station and/or the radio communication.

The control information may be a downlink control information (DCI), uplink control information (UCI) or sidelink control information (SCI).

The radio communication may include at least one communication of data according to the control information from a transmitting station to a receiving station. The parameters of the control information may relate to the data communication in the radio network. The parameters may specify the transmission or reception of the data, e.g. on the physical layer (layer 1 or L1) and/or the data link layer (layer 2 or L2).

The second station may be the transmitting station or the receiving station. The data communication may be subsequent to the transmission of the control information, e.g., within the same TTI or subframe. The control information may grant radio resource to the transmitting station. Alternatively or in addition, the control information may assign radio resource to the receiving station.

The data may be communicated in the radio network. For example, the data may be communicated within range of communication of the first station. The data communication may include an uplink transmission. For example, the second station may be the transmitting station, and the first station may be the receiving station. Alternatively or in addition, the data communication may include a downlink transmission. For example, the first station may be the transmitting station, and the second station may be the receiving station. Alternatively or in addition, the data communication may include a sidelink transmission, e.g., an in-coverage sidelink. For example, the first station may be different from both the transmitting station and the receiving station. The transmitting station and/or the receiving station may be an instance of the second station.

The data may be communicated beyond a range of the first station. Only one of the transmitting station and the receiving station may be the second station in wireless communication with the first station. For example, the data communication may include an out-of-coverage sidelink.

The data may be communicated between stations of the radio network, e.g., between a base station and a wireless station or between wireless stations. The control information may relate to transmitting and/or receiving data at the second station. More specifically, the control information may relate to uplink (UL) data transmission of the mobile device (e.g., UL scheduling), downlink (DL) data reception at the mobile device (e.g., DL scheduling) and/or sidelink (SL) transmission (e.g., SL scheduling) between mobile devices.

The first station and/or the second station may be or include a base station (e.g., an access point) or a wireless station (e.g., a mobile station). The radio network may be a cellular network. The radio network may include a radio access network (RAN). The RAN may provide radio access, e.g., in cells of base stations. The RAN may be part of a cellular telecommunications network, e.g., according to 3GPP Long Term Evolution (LTE), LTE-Advanced and/or 5G. A typical amount of control data in a DCI for LTE is 40 bits to 100 bits of information.

The first station may be a base station (e.g., an evolved node B or eNB) or a Remote Radio Head (RRH). The first station may provide radio access to a plurality of wireless stations, e.g., in a cell associated with the first station. The RAN may include a plurality of base stations with corresponding cells. The second station may be another base station of the RAN. The first base station transmitting the control information and the other second base station receiving the control information may provide radio access in neighboring cells.

The second station may be or include a wireless station, e.g., with or without a user interface. The second station may be a mobile station. The second station may be a user equipment (UE). The second station may be configured for machine-type communication (MTC). The second station may include a sensor and/or an actuator.

The wireless station may be in the connected state with the RAN, e.g., according to a radio resource control (RRC) protocol of the RAN. The DCI may include a resource grant for transmitting data from the wireless station to the base station of the RAN, and/or a resource assignment for transmitting data from the node of the RAN to the wireless station. The DCI may be transmitted over a physical downlink control channel (PDCCH) or an enhanced PDCCH (ePDCCH).
At least one parameter indicated by the entry may depend on at least one of a physical location of the second station and a channel condition of a channel used for the radio communication.

The different versions of the control information may be transmitted for each of multiple radio communications. Each of the multiple radio communications may involve the second station. The at least one parameter that is expressly transmitted in the supplementary information parameter may be changing more frequently or may have a rarer value than parameters transmitted based on the reference to the entry in the table. At least one parameter indicated by the supplementary information may be different for each of the multiple radio communications. Alternatively or in addition, at least one parameter indicated by the entry is equal for each of the multiple radio communications.

As to another aspect, a method of receiving control information in a radio network from a first station at a second station is provided. The control information is indicative of a plurality of parameters for a radio communication involving at least the second station. The method comprises or triggers a step of receiving a reference to an entry of a table and supplementary information, wherein the referenced entry of the table is indicative of at least one of the parameters of the control information; and a step of determining the plurality of parameters of the control information by combining the entry with the supplementary information.

The second station may perform or trigger the steps of the other method aspect.

The checksum received as reference may be the checksum of the plurality of parameters of the control information. The second station may resolve the received reference by evaluating a checksum for each entry in the table in combination with the supplementary information. The entry referred to by the received reference is the entry which yields, in combination with the supplementary information, the checksum received as the reference.

In determining the parameters, the entry may be determined or identified based on the received reference. Determining the plurality of parameters may include identifying the referenced entry in the table using the reference. At least one parameter of the referenced entry may match the at least one parameter of the control information. The supplementary information may be optionally used for identifying the entry, e.g., if the reference is a checksum of the control information resulting from complementing or modifying the parameters of the entry. For example, the entry may be identified by the reference matching the checksum computed based on the entry combined with the supplementary information.

The method may further comprise any feature disclosed in the context of the one method aspect and/or one or more steps corresponding to any of the steps of the one method aspect.

For example, the method may further comprise or trigger a step of initializing or modifying an instance of the table at the second station for consistency with an instance of the table at the first station. The table may be initialized or modified by radio resource control (RRC) signals received from the first station.

An entry indicative of at least one parameter of previously received control information may be entered into the table responsive to determining that the previously received control information has been successfully received at the second station. Alternatively or in addition, an entry indicative of at least one parameter of previously received control information may be deleted from the table upon expiry of a timer for the corresponding entry.

As a still further example, updated versions of the control information may be received. At least one parameter indicated by the (e.g., referenced) entry is updated less frequently than at least one parameter indicated by the supplementary information.

As a still further example, the radio network may include a radio access network (RAN). The first station may include a base station of the RAN. The control information may include downlink control information (DCI) received from the base station.

Determining the plurality of parameters may include identifying the referenced entry in the table using the reference. At least one parameter of the referenced entry may match the at least one parameter of the control information.

Different versions of the control information may be received for each of multiple radio communications involving the second station.

As to another aspect, a computer program product is provided. The computer program product comprises program code portions for performing any one of the steps of the method aspects disclosed herein when the computer program product is executed by one or more computing devices. The computer program product may be stored on a computer-readable recording medium. The computer program product may also be provided for download via a data network, e.g., the radio network and/or the Internet. Alternatively or in addition, the method may be encoded in a field-programmable gate array (FPGA) and/or an application-specific integrated circuit (ASIC), or the functionality may be provided for download by means of a hardware description language.

As to one device aspect, a device for transmitting control information in a radio network from a first station to a second station is provided. The control information is indicative of a plurality of parameters for a radio communication involving at least the second station. The device may be configured to perform the one method aspect. Alternatively or in addition, the device comprises a determining unit configured to determine an entry of a table, wherein the entry is indicative of at least one of the parameters of the control information; and a transmitting unit configured to transmit, to the second station, a reference to the entry of the table and supplementary information, wherein the entry and the supplementary information are jointly indicative of the plurality of parameters of the control information.

As to another device aspect, a device for receiving control information in a radio network from a first station at a second station is provided. The control information is indicative of a plurality of parameters for a radio communication involving at least the second station. The device may be configured to perform the other method aspect. Alternatively or in addition, the device comprises a receiving unit configured to receive a reference to an entry of a table and supplementary information, wherein the referenced entry of the table is indicative of at least one of the parameters of the control information; and a determining unit configured to determine the plurality of parameters of the control information by combining the entry with the supplementary information.

As to a further device aspect, a device for transmitting control information in a radio network from a first station to a second station is provided. The control information is indicative of a plurality of parameters for a radio communication involving at least the second station. The device comprises a processor and a memory, said memory containing instructions executable by said processor whereby the device is operative to determine an entry of a table, wherein the entry is indicative of at least one of the parameters of the control information; and transmit, to the second station, a reference to the entry of the table and supplementary information, wherein the entry and the supplementary information are jointly indicative of the plurality of parameters of the control information.

As to a further device aspect, a device for receiving control information in a radio network from a first station at a second station is provided. The control information is indicative of a plurality of parameters for a radio communication involving at least the second station. The device comprises a processor and a memory, said memory containing instructions executable by said processor whereby the device is operative to receive a reference to an entry of a table and supplementary information, wherein the referenced entry of the table is indicative of at least one of the parameters of the control information; and determine the plurality of parameters of the control information by combining the entry with the supplementary information.

As to a further aspect, a first station configured for transmitting control information in a radio network from the first station to a second station is provided. The control information is indicative of a plurality of parameters for a radio communication involving at least the second station. The first station may comprise the device according to the one device aspect or may be configured to perform the one method aspect. Alternatively or in addition, the first station comprises a determination module for determining an entry of a table, wherein the entry is indicative of at least one of the parameters of the control information; and a transmission module for transmitting, to the second station, a reference to the entry of the table and supplementary information, wherein the entry and the supplementary information are jointly indicative of the plurality of parameters of the control information.

As to a further aspect, a second station configured for receiving control information in a radio network from a first station at the second station is provided. The control information is indicative of a plurality of parameters for a radio communication involving at least the second station. The second station may comprise the device according to the other device aspect or may be configured to perform the other method aspect. Alternatively or in addition, the second station comprises a reception module for receiving a reference to an entry of a table and supplementary information, wherein the referenced entry of the table is indicative of at least one of the parameters of the control information; and a determination module for determining the plurality of parameters of the control information by combining the entry with the supplementary information.

The devices and/or the stations may further include any feature disclosed in the context of the method aspects. Particularly, any one of the units and modules, or a dedicated unit or module, may be configured to perform one or more of the steps of any one of the method aspects.

### BRIEF DESCRIPTION OF THE DRAWINGS

Further details of embodiments of the technique are described with reference to the enclosed drawings, wherein:
- Fig. 1: shows a schematic block diagram of a device for transmitting control information in a radio network;
- Fig. 2: shows a schematic block diagram of a device for receiving control information in a radio network;
- Fig. 3: shows a flowchart for a method of transmitting control information in a radio network, which is implementable by the device of Fig. 1;
- Fig. 4: shows a flowchart for a method of receiving control information in a radio network, which is implementable by the device of Fig. 2;
- Fig. 5: shows a flowchart for a first implementation of the method of Fig. 3;
- Fig. 6: shows a flowchart for an implementation of the method of Fig. 4;
- Fig. 7: shows a flowchart for an embodiment of combining entry and supplementary information, which is implementable in the devices of Figs. 1 and 2;
- Fig. 8: shows a flowchart for a second implementation of the method of Fig. 3;
- Fig. 9: shows a flowchart for a third implementation of the method of Fig. 3;
- Fig. 10: schematically illustrates an embodiment of a table, which is implementable in the devices of Figs. 1 and 2;
- Fig. 11: shows a schematic block diagram of an embodiment of a first station for performing the method of Fig. 3; and
- Fig. 12: shows a schematic block diagram of an embodiment of a second station for performing the method of Fig. 4.

### DETAILED DESCRIPTION

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a 5G New Radio implementation, it is readily apparent that the technique described herein may also be implemented in any other radio network, including Long Term Evolution (LTE) or a successor thereof, Wireless Local Area Network (WLAN) according to the standard family Institute of Electrical and Electronics Engineers (IEEE) 802.11 and/or ZigBee based on IEEE 802.15.4.

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced Reduced Instruction Set Computing Machine (ARM).

It will also be appreciated that, while the following embodiments are primarily described in context with methods and devices, the invention may also be embodied in a computer program product as well as in a system comprising a computer processor and memory coupled to the processor, wherein the memory is encoded with one or more programs that may perform the functions and steps or implement the units and modules disclosed herein.

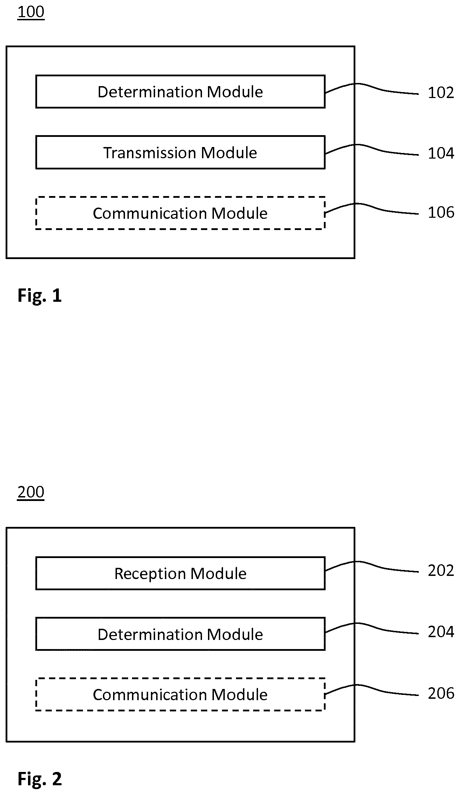

Fig. 1 schematically illustrates a block diagram of a device 100 for transmitting control information in a radio network from a first station to a second station. The control information is indicative of a plurality of parameters for a radio communication involving at least the second station.

The device 100 comprises a determination module 102 for determining an entry in a table. Each entry in the table may store a different case or template of control information, e.g., control information previously transmitted by the first station. For example, each entry is indicative of one parameter, two parameters or the plurality of parameters for the corresponding case or template of control information. Preferably, the at least one parameter stored in each entry may include the most persistent parameter of the control information. The determined entry is indicative of at least one of the parameters of the control information to be transmitted.

The table is accessible (at least) from the second station. Optionally, the table is located at the second station. In a stand-alone implementation, the table is only accessible from the second station.

The table may be shared between the first station and the second station. The table may be shared by providing access to the table from both the first station and the second station. Alternatively or in addition, the table may be shared by maintaining consistent instances of the table at the first station and the second station, respectively.

The device 100 further comprises a transmission module 104 for transmitting a compact control message to the second station. The compact control message includes a reference to the entry of the table and supplementary information. The entry and the supplementary information are jointly indicative of the plurality of parameters of the control information. Thus, the compact control message provides the second station with the complete control information. Preferably, the supplementary information may be indicative of the most frequently changing parameter.

The device 100 may be embodied by the first station, e.g., a base station of the radio network. The second station may be a wireless station configured to access and/or wirelessly connect to the first station.

Optionally, the device 100 comprises a communication module 106 for participating in the radio communication that is based on the control information. The radio communication may be a data communication, e.g., an uplink reception or downlink transmission at the first station. The modules 104 and 106 may be implemented by a single module or unit. Alternatively, the modules 104 and 106 may be implemented separately, e.g., in a control plane and a data plane, respectively.

Fig. 2 schematically illustrates a block diagram of a device 200 for receiving control information in a radio network from a first station at a second station. The control information is indicative of a plurality of parameters for a radio communication involving at least the second station.

The device 200 comprises a reception module 202 for receiving a reference to an entry of a table and supplementary information. Each entry in the table may store a different case or template of control information, e.g., control information previously received at the second station. For example, each entry is indicative of one parameter, two parameters or the plurality of parameters for the corresponding case or template of control information. Preferably, the at least one parameter stored in each entry may include the most persistent parameter of the control information. The referenced entry of the table is indicative of at least one of the parameters of the control information.

The table is accessible (at least) from the second station. Optionally, the table is located at the second station. In a stand-alone implementation, the table is only accessible from the second station. Alternatively or in addition, the table may be shared, e.g., as described above.

The device 200 further comprises a determination module 204 for determining the plurality of parameters of the control information. The entry and the supplementary information are jointly indicative of the plurality of parameters of the control information, which is used by the determination module 204 combining the entry with the supplementary information for determining the plurality of parameters.

The device 200 may be embodied by the second station, e.g., a wireless station configured to access or wirelessly connect to the first station. The first station may be a base station of the radio network.

Optionally, the device 200 comprises a communication module 206 for participating in the radio communication that is based on the control information. The radio communication may be a data communication, e.g., an uplink transmission or downlink reception at the second station. The modules 202 and 206 may be implemented by a single module or unit. Alternatively, the modules 202 and 206 may be implemented separately, e.g., in a control plane and a data plane, respectively.

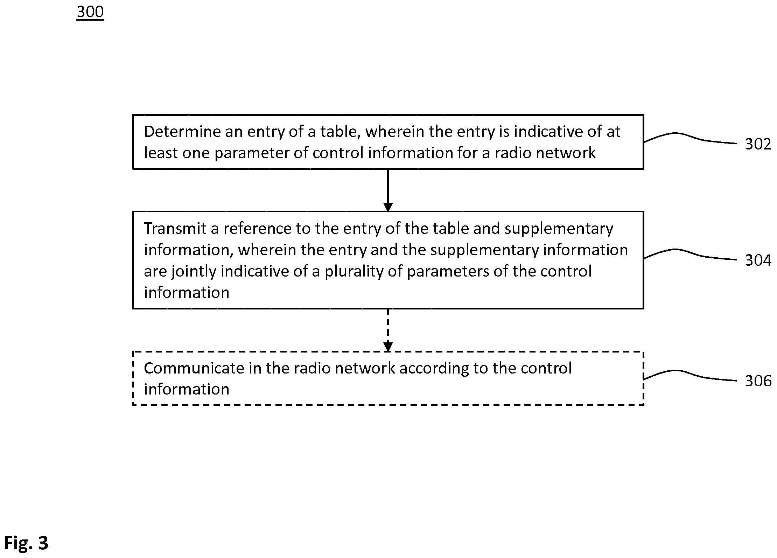

Fig. 3 shows a method 300 of transmitting control information in a radio network from a first station to a second station. The control information, which may be a given input to the method 300, is indicative of a plurality of parameters for a radio communication involving at least the second station.

The method 300 comprises or triggers a step 302 of determining an entry of a table. The entry is indicative of at least one of the parameters of the control information. The method 300 further comprises or triggers a step 304 of transmitting, to the second station, a reference to the entry of the table and supplementary information. The entry and the supplementary information are jointly indicative of the plurality of parameters of the control information. Optionally, data is received or transmitted in a communicating step 306 according to the control information.

The method 300 may be performed by the device 100, e.g., at the first station. For example, the modules 102, 104 and 106 may perform the steps 302, 304 and 306, respectively.

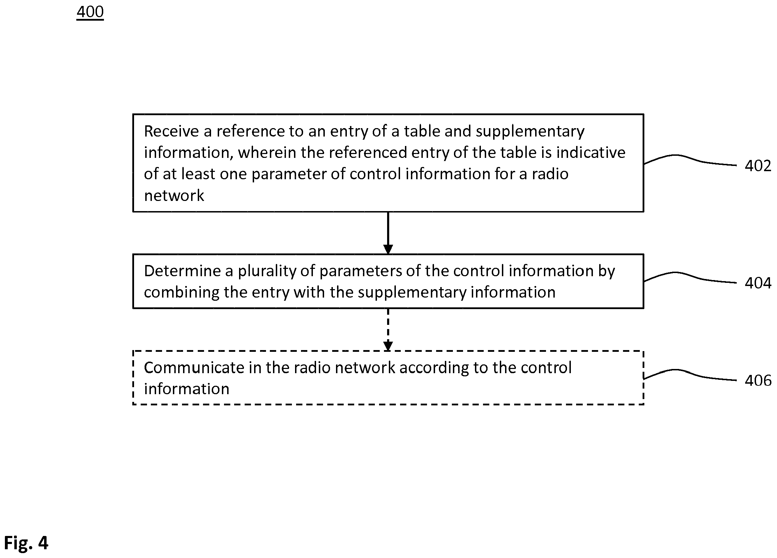

Fig. 4 shows a flowchart for a method 400 of receiving control information in a radio network from a first station at a second station. The control information, which may be an output of the method 400, is indicative of a plurality of parameters for a radio communication involving at least the second station.

The method 400 comprises or triggers a step 402 of receiving a reference to an entry of a table and supplementary information. The referenced entry of the table is indicative of at least one of the parameters of the control information. The method 400 further comprises or triggers a step 404 of determining the plurality of parameters of the control information by virtue of the entry and the supplementary information being jointly indicative of the plurality of parameters. Optionally, data is received or transmitted in a communicating step 406 according to the control information.

The method 400 may be performed by the device 200, e.g., at the second station. For example, the modules 202, 204 and 206 may perform the steps 402, 404 and 406, respectively.

In one implementation, the instances of the table are kept identical. In another implementation, the consistency does not require identical instances of the table. It may be sufficient that the reference uniquely determines an entry in the instance at the second station. Alternatively, it may be sufficient that, if the reference uniquely determines an entry in the instance at the second station, the determined entry is equal to the entry determined at the first station in the step 302. For example, the instance of the table at the first station may include all entries of the instance of the table at the second station.

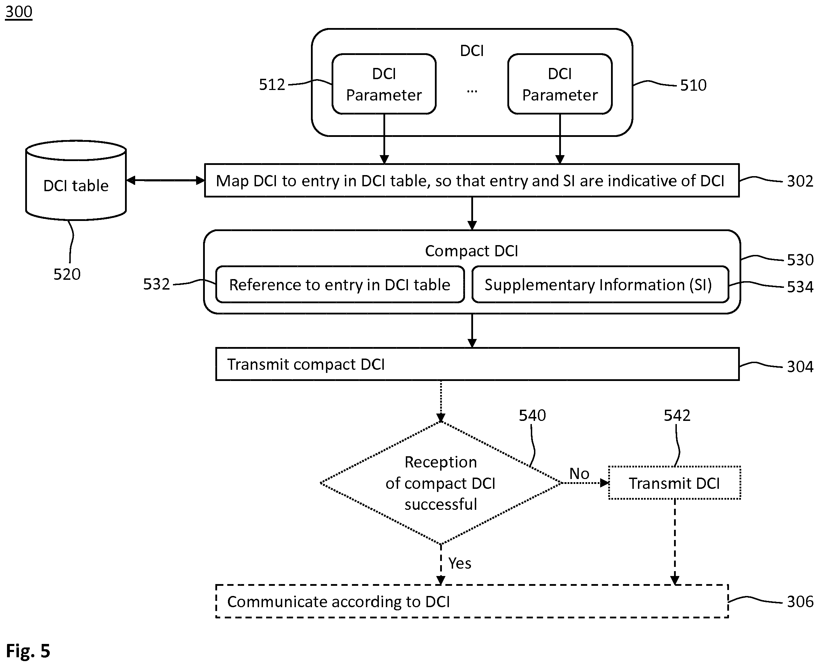

Fig. 5 show a flowchart for a first implementation of the method 300 performed or triggered by the first station. By way of example, and not limitation, the control information includes Downlink Control Information (DCI) 510, e.g., for the first station being a base station and the second station being a wireless station. While the DCI 510 is used below as an example for the control information, the control information may, alternatively or additionally, include Uplink Control Information (UCI, e.g., for the first station being a wireless station and the second station being a base station) or Sidelink Control Information (SCI, e.g., for the first station and the second station being a wireless station).

The DCI 510 includes a plurality of parameters 512, e.g., for controlling physical layer and/or data link layer of the radio communication. Given the DCI 510 to be transmitted to the second station, the first station maps the DCI 510 to one entry of the table in the step 302, optionally using its instance 520 of the table.

The compact DCI 530 does not include values for the plurality of parameters 512. The compact DCI 530 comprises the reference 532 to the entry determined in the step 302 and the supplementary information 534 so that the combination of the entry reference 532 and the supplementary information 534 is jointly indicative of the DCI 510. Hence, the compact DCI 530 in conjunction with an access to the table is indicative of the DCI 510. The compact DCI 530 is transmitted from the first station in the step 304 and can be used to derive the DCI 510.

The DCI 510 may be referred to as the "full DCI" to emphasize that it refers to the plurality of parameters 512 required for the radio communication, e.g. reception and/or transmission of data. The compact DCI 530 (or "short DCI") refers to the combination of entry reference 532 and supplementary information 534, or the compact control message including this combination.

Optionally, if the second station fails to determine an entry based on the reference 532 (e.g., because the reference 532 yields no entry or is ambiguous in the table or the instance of the table at the second station), the first station is triggered in a step 540 to transmit in a step 542 a conventional control message comprising values for the plurality of parameters 512 to the second station. The trigger (which indicates the failure to the first station) in the step 540 may be explicitly received or implicitly determined by the first station.

The transmission 304 is determined to be successful in the step 540, if the first station receives an acknowledgment for the transmission 304 from the second station (explicit acknowledgment) or if the first station measures that the second station is involved in the radio communication based on the DCI 510 (implicit acknowledgment). The first station does not have to be involved (i.e., as receiver or transmitter) in the radio communication. For the implicit acknowledgment, the first station may measure energy or decode a signal on radio resources specified by the DCI 510.

If a timer at the first station expires without (e.g., explicit or implicit) acknowledgement, or if the first station determines that the radio communication specified by the DCI 510 is absent, the step 540 determines the failure of the transmission 304. The failure of the transmission 304 triggers the transmission 542.

If the first station is also involved in the radio communication based on the DCI 510, the first station receives or transmits data in the step 306.

The first station may control the radio communication of two or more second stations in the radio network. The instance 520 of the table at the first station may include cases or templates of control information for the two or more second stations, e.g., control information previously transmitted by the first station to any of the second stations.

The first and second stations may be referred to as nodes of the radio network. At least one of the first and second stations may a node of a radio access network (RAN). In a 3GPP LTE or NR implementation of the RAN, the first station may be an Evolved Node B (eNodeB or eNB) of the RAN. The second station may be a user equipment (UE).

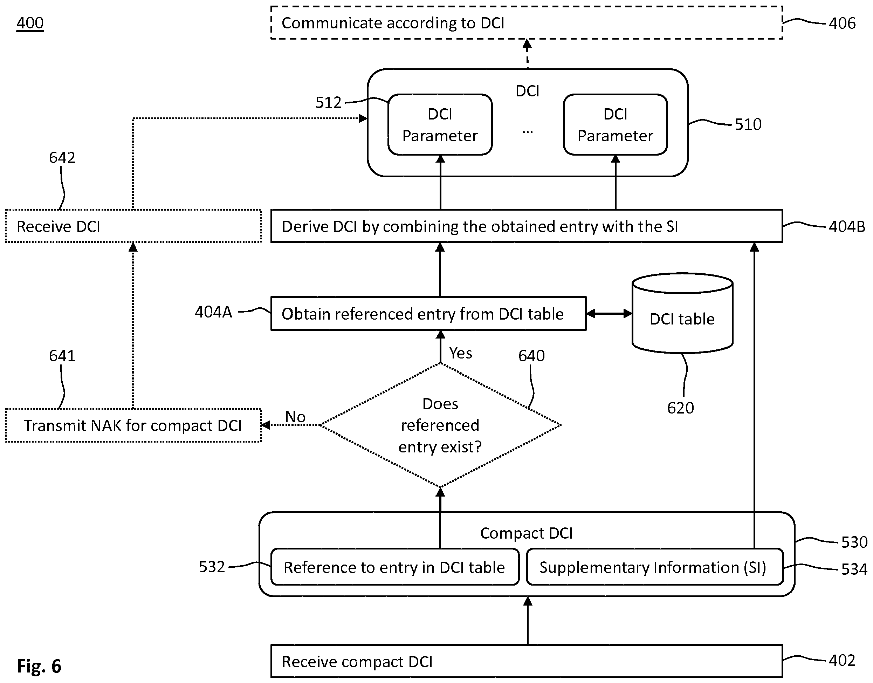

Fig. 6 shows a flowchart of an implementation of the method 400 performed by the second station. The second station receives the compact DCI 530 in the step 402.

If the second station fails to uniquely determine an entry in the table 620 (e.g., in its instance 620 of the table) in a step 640, a negative acknowledgment (NAK) for the transmission 304 is transmitted in a step 641. The NAK triggers the transmission 542 of the conventional DCI, which is received at the second station in a step 642.

Otherwise, the entry is obtained from the instance 620 of the table in a substep 404A of the step 404. The combination of the obtained entry and the supplementary information 534 yields the DCI 510 in a substep 404B of the step 404.

The substeps 404A and 404B may be performed sequentially, if the step 640 is determined solely based on the reference (e.g., a table index). If identifying the entry based on the reference (e.g., a hash value or checksum) requires an evaluation of the entry, both substeps 404A and 404B may be inherent to the step 404.

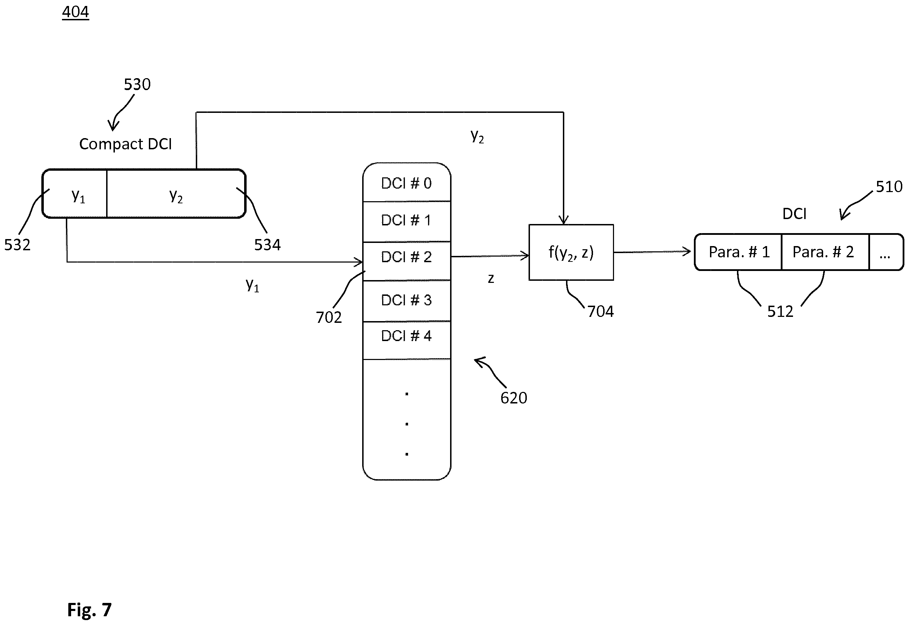

Fig. 7 shows a flowchart for an embodiment of combining the supplementary information 534 and the entry 702 according to a function 704 yielding the plurality of parameters 512 of the DCI 510. The function 704 may include modifying at least one of the parameters indicated by the entry 702 according to a modification indicated by the supplementary information 534. The resulting DCI 510 is the full DCI with all parameters 512 required for the radio communication involving the second station, e.g., for reception of downlink data, transmission of uplink data, exchange of sidelink data or other control purposes.

The entry 702 is identified using the reference 532. The entry 702 may be identified by the reference 532. For example, the reference 532 in the embodiment shown in Fig. 7 includes an index y₁. The reference 532 may be used as an index into the table 620 to obtain stored control information as output z. Alternatively, the entry 702 is identified using both the reference 532 and the supplementary information 534, e.g., if the reference is a hash value or checksum of the DCI 510.

The supplementary information 534 includes bits y₂ explicitly transmitted in the compact DCI 510. Typically, the supplementary information 534 has few bits y₂. An amount of bits representing the supplementary information 534 is less than an amount of bits representing the entry z. Examples of frequently-changing parameters that are part of the supplementary information 534 include redundancy version and new-data indicator related to the operation of the HARQ protocol. The index y₁ and the explicit bits y₂ are included in the compact DCI message 530.

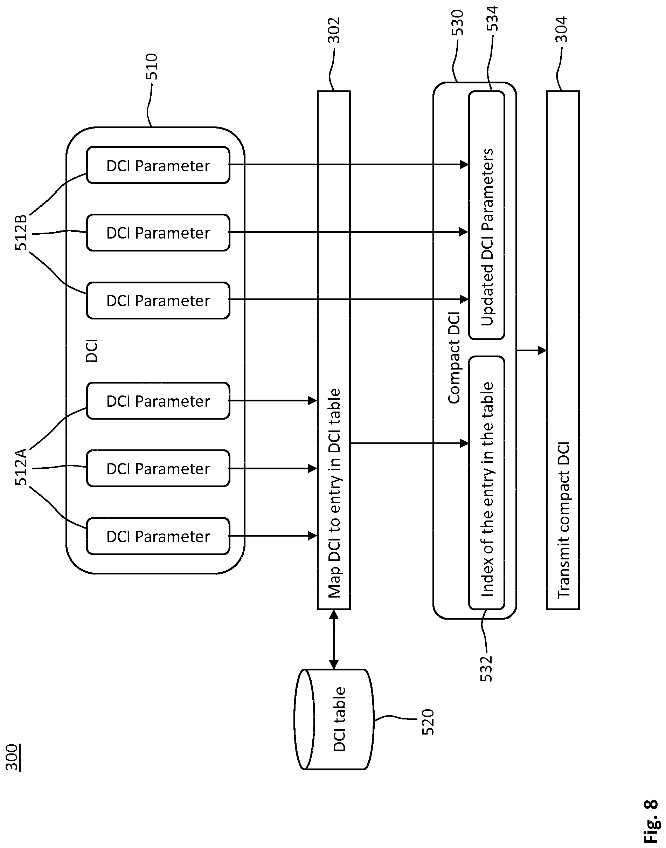

Fig. 8 shows a second implementation of the method 300, which is combinable with the implementations according to Fig. 3 and/or Fig. 5. Some of the control information 510 to be transmitted from the first station to the second station at different times does not change rapidly (which is referred to as persistence). The redundant transmission of such persistent parameters 512A is avoided, while only one or more parameters 512B of the control information 510, if any, that change more frequently are explicitly transmitted in the form of the supplementary information 534, e.g., the few bits y₂.

The function 704 may be used for the combining in the step 404 at the second station. Optionally, the function 704 may be used in the step 302 at the first station to determine the entry, e.g., if the function 704 is not invertible for mapping the DCI 510 to the entry z.

Alternatively or in addition to the different time scales for changes of different parameters 512A and 512B, the technique can exploit that in many cases (e.g., for a typical second station) only a small set of the parameters 512B is used in the control information messages 510. The parameters 512A for controlling radio functionality, that the second station does not use or is not capable of using, is not explicitly indicated in the control information message 510. For example, a voice-only terminal as the second station and/or for small payloads in the radio communication, the full range of payload sizes or multi-antenna options offered by the RAN, such as LTE and NR, is not used.

In any implementation or embodiment, the parameters 512A transmitted by virtue of the reference 532 may include parameters that change slower than other parameters 512B of the control information 510 and/or parameters related to radio functionality not supported by the second station. As a result, the technique can lead to shorter control information messages and improved control channel capacity.

The index is an example for the reference 532. The entries 702 of the table 620 may be labelled by the index. The index may be a sequence number for each entry, e.g. incremented when a further entry is created. Alternatively, the index may a time stamp of creating the further entry, e.g., a time stamp of a transmission of previously transmitted control information that is stored (or cached) in the table 620.

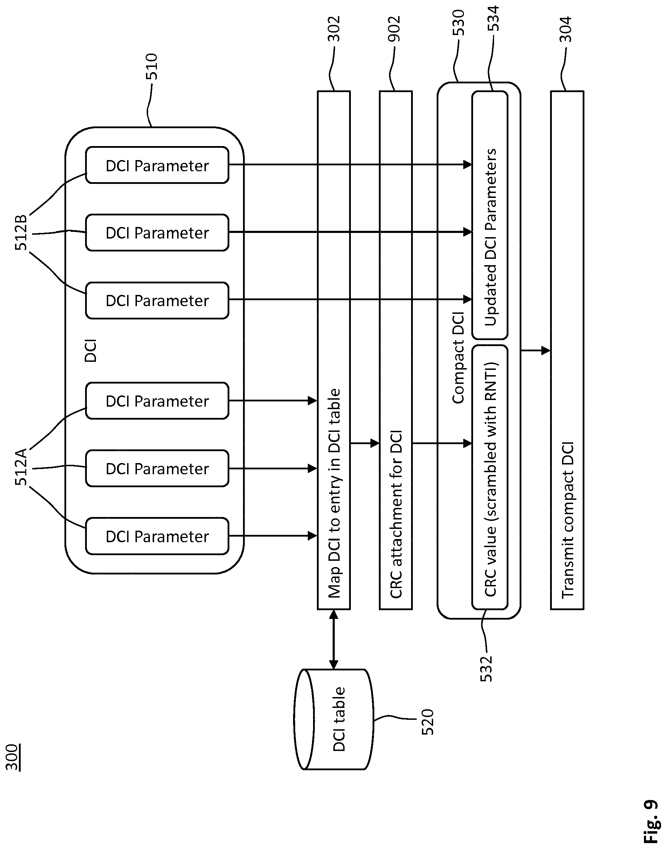

Fig. 9 shows a third implementation of the method 300, which is combinable with the implementations according to Fig. 3, Fig. 5 and/or Fig. 8. Alternatively or in combination with the index, a hash value or a checksum is used as the reference 532. The checksum may be a Cyclic Redundancy Check (CRC) value.

When the first station has determined the entry to be referenced in the step 302, the first station computes in a step 902 the hash value or checksum for referencing the determined entry, e.g., the stored control information of a previous transmission.

In a first variant, the hash value or checksum is computed in the step 902 (e.g., independent of the supplementary information 534) for the entry determined in the step 302. In the first variant, the second station can obtain the entry directly based on the reference 532 (e.g., in the substep 404A), similar to the index. More specifically, in the step 402 or 404, the hash value or the checksum is evaluated for each entry (e.g., each stored control information) and compared with the received reference to identify the entry in the instance 620 of the table at the second station. In the step 404, the parameters obtained from the identified entry (e.g., the previously received control information) are complemented or modified according to the supplementary information 534.

In a second variant (which is combinable with the first variant), the hash value or checksum is computed in the step 902 for the control information 510 to be transmitted. Optionally, the steps 302 and 902 performed by the first station are identical, e.g. in the stand-alone implementation without accessing the table at the first station. In the second variant, the second station evaluates each entry in combination with the supplementary information 534 to identify the referenced entry (e.g., in the step 404). More specifically, the second station, in the step 404, obtains the parameters from each entry (e.g., the previously received control information) and complements or modifies them according to the supplementary information 534 in order to evaluate the hash value or checksum, entry by entry, and compare the evaluation result with the received reference 532 to identify the entry yielding the correct control information 510.

In any variant, the hash value or checksum may further be scrambled with a Radio Network Temporary Identifier (RNTI) of the second station. This allows the first station controlling multiple second stations to maintain a single instance 520 of the table for the multiple second stations.

In one embodiment of the technique (which is combinable with any of above implementations), the table 620 (e.g., the instance 620 of the table) is pre-configured and/or pre-defined at the second station. The table 620 in the second station can be predefined according to a type of the second station (e.g., a terminal type) and/or radio capabilities of the second station. Alternatively or in addition, the table 620 may be semi-statically configured (e.g., using Radio Resource Control, RRC, signaling), and/or dynamically updated (e.g., using Medium Access Control (MAC), signaling or L1/L2 signaling).

Moreover, the table 620 may comprise both predefined entries and configurable (and, optionally, updated) entries. The predefined entries may include control information for paging, random access response, etc.

In an alternate or complementing embodiment, the table 620 is populated by storing previously transmitted control information. For example, the table 620 is constructed as part of an ongoing data transaction. The table 620 may be initially vacant. The technique is thus embodied to gradually allow for more and more usage of the compact DCI 530 as formats of the control messages.

The table 620 may be a cache for control information previously received (e.g., in a previous conventional control message and/or a previous compact control message). Each entry in the table 620 may correspond to a previous control message. The table 620 may be available at the second station (e.g., the UE), i.e., the receiving side or slave-side of the control exerted by the first station. For example, each of the devices 100 and 200 independently stores (or decides to store according to a criterion applied by both devices 100 and 200 or a flag in the control message) the control information communicated between the devices 100 and 200 in corresponding instances 520 and 620 of the table.

One possibility is for the first station to transmit full DCIs 510 (using conventional DCI messages) with all parameters 512 included over the control channel to the second station. The second station stores (e.g., the relevant parts of) successfully received full DCIs 510 in its DCI table 620. Once a full DCI 510 has been acknowledged, the first station may use the compact DCIs 530 to refer to previously transmitted DCIs 510.

The reference 532 to a stored full DCI 510 as entry 702, which is included in the compact DCI 530, may be a checksum of the full DCI (e.g., in the combination of above first variant and second variant). The second station searches its table 620 for a matching checksum. An index is not needed. Particularly, no index has to be transmitted when building up the table 620 at the second station by transmitting the conventional DCIs.

Furthermore, a CRC value appended to each conventional DCI message provides a certain assurance that the entries 702 of the table 620 are correct. Further, if the number of table positions N_{table} is less than the number of possible checksums, N_{CRC}, the probability of using a previously received false positive is reduced.

In any embodiment, implementation or variant, optionally to ensure consistent table entries between the first station and the second station, some form of acknowledgement (ACK) of new entries in the instances 520 and 620 of the DCI table is used. Such acknowledgements may be in the form of, e.g., explicit RRC or MAC messages transmitted in the uplink as part of ongoing uplink transmissions. Various forms of L1/L2 control signaling may also be exploited for this purpose, either L1/L2 control signaling explicitly designed for this purpose or by exploiting already existing L1/L2 control signaling such as the HARQ acknowledgements. The first station may consider both HARQ ACK and/or NAK received from the second station as acknowledgement of a downlink assignment DCI in the step 540. Furthermore, if an ACK is not received from the second station until a further DCI is to be transmitted to the second station, the first station sends the convention DCI in the step 542.

For uplink grant DCIs 510, reception of valid uplink data constitutes an acknowledgement in the step 540. Moreover, the second station may transmit a "DCI NAK" to indicate reference to false table positions in the step 641.

Optionally, the DCIs derived in the step 404, e.g., the output of the function 704 in Fig. 7, may be used to update the table 620 at the second station in order. The table 620 can be efficiently maintained, also after the built-up using conventional DCIs is completed. Particularly, this allows compact DCI messages 530 to refer to the table 620 in the future. Error detection (e.g., by means of the CRC) and/or error correction avoids that this leads to error propagation. Alternatively or in addition, error propagation in the table is avoid by not enter DCI 510 derived in the step 404 into the table 620. For example, only explicitly received DCIs 510, a received initial table and/or received table modifications are entered into the table 620.

For any embodiment, implementation or variant, a compact DCI format may be pre-defined. The compact DCI format may comprise a reference field for the reference 532 to the DCI table 620, which identifies the pre-configured DCI table entry (or DCI format/message) to be read by the second station. The size of the reference field is dependent on the number of DCI table entries 702.

The compact DCI format may further comprise a DCI parameter type header field, which defines the supplementary information 534 (e.g., the remaining short DCI bits y₂). For example, the DCI parameter type header field includes a type and/or an identifier of the one or more parameters 512B in the supplementary information 534. Alternatively or in addition, the DCI parameter type header field specifies an action of the supplementary information 534 (e.g., complementing or modifying). The size of the DCI parameter type header may be 1-2 bits.

The compact DCI format may further comprise a DCI parameter value field for the parameters of the supplementary information, e.g., rapidly changing DCI parameters. The size of the DCI parameter value field may be a few bits. The supplementary information may be transmitted in the DCI parameter type header field and the DCI parameter value field.

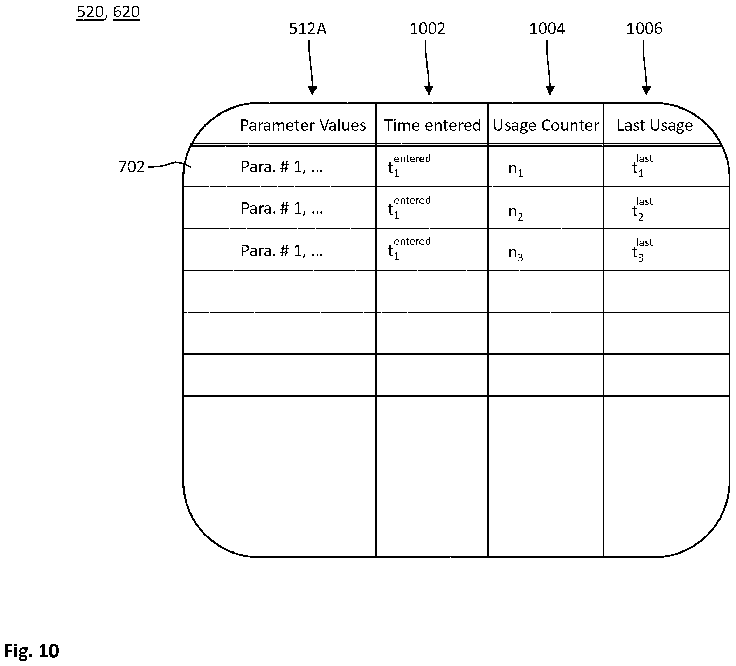

Fig. 10 schematically illustrates an embodiment of the table, e.g., the instance 520 and/or the instance 620. Each entry 702 (shown as a row in Fig. 10) includes values for the parameters, e.g., the relevant parameters 512A or all parameters 512 of previously received (i.e., cached) control information. Additionally, each entry in the table may be associated with an expiry time. The expiry time may be implemented by storing, in association with the corresponding entry, a time 1002 at which the entry was created. Optionally, a usage counter 1004 is set to zero upon creating the entry and incremented in the step 404. If the entry has not been used with a minimum frequency (e.g., compared with the ratio of time 1002 and usage counter 1004), the entry is deleted from the table.

Alternatively or in addition, the expiry time may be implemented by storing, in association with the corresponding entry, a time 1006 at which the entry was used in the step 404. If the entry has not been used for a certain period of time, it is deleted from the table.

The time stamps 1002 and 1006 may be represented by a bit string, e.g., 64 bits. The time of the time stamps may be defined relative to 00:00:00 on 1 January 1900.

Some or all of the entries in the table may be deleted at certain events, e.g. event defining a radio relation between the first and second stations. For example, some or all of the entries in the table may be deleted at a handover between different cells or coverage areas, a transition from a connected state to an idle state of the second station or upon reception of a "clear cache" command from the RAN, e.g., the second station.

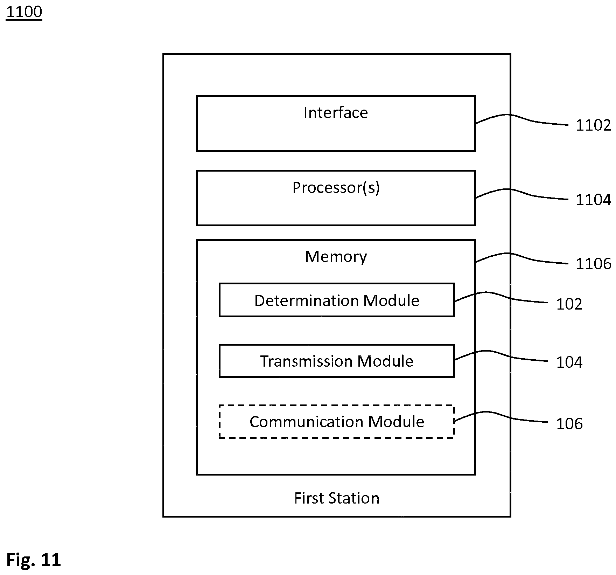

Fig. 11 shows a schematic block diagram for an embodiment of a first station 1100. The first station 1100 comprises a radio interface 1102 for radio communication with at least a second station, one or more processor circuits 1104 for performing the method 300 and memory 1106 coupled to the processor circuits 1104. The memory 1106 is encoded with instructions that implement each of the modules 102 and 104, and optionally 106.

The one or more processor circuits 1104 may be a combination of one or more of a microprocessor, controller, microcontroller, central processing unit, digital signal processor, application specific integrated circuit, field programmable gate array, or any other suitable computing device, resource, or combination of hardware, software and/or encoded logic operable to provide, either alone or in conjunction with other station components, such as the memory 1106, station functionality. For example, the one or more processor circuits 1104 may execute instructions stored in the memory 1106. Such functionality may include providing various features and steps discussed herein, including any of the benefits disclosed herein.

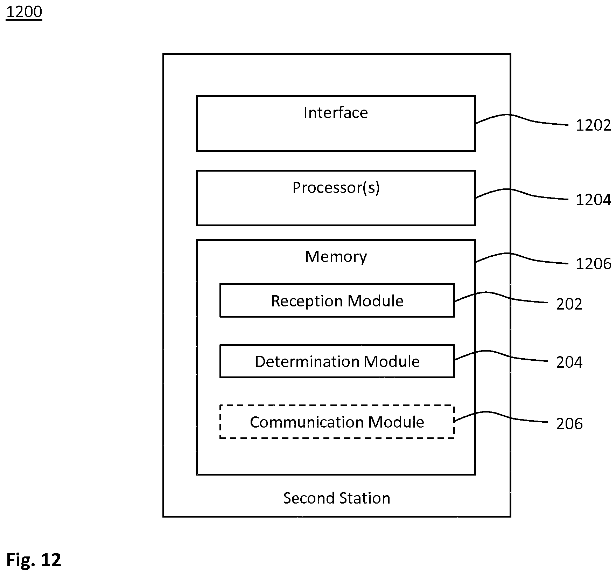

Fig. 12 shows a schematic block diagram for an embodiment of a second station 1200. The second station 1200 comprises a radio interface 1202 for radio communication with at least a second station, one or more processor circuits 1204 for performing the method 300 and memory 1206 coupled to the processor circuits 1204. The memory 1206 is encoded with instructions that implement each of the modules 202 and 204, and optionally 206.

The one or more processor circuits 1204 may be a combination of one or more of a microprocessor, controller, microcontroller, central processing unit, digital signal processor, application specific integrated circuit, field programmable gate array, or any other suitable computing device, resource, or combination of hardware, software and/or encoded logic operable to provide, either alone or in conjunction with other station components, such as the memory 1206, station functionality. For example, the one or more processor circuits 1204 may execute instructions stored in the memory 1206. Such functionality may include providing various features and steps discussed herein, including any of the benefits disclosed herein.

As has become apparent from above description of exemplary embodiments, the technique can reduce control signaling. The technique can be embodied to distinguish between persistent and rapidly changing control parameters, and/or to distinguish between supported and unsupported control parameters.

Embodiments reduce an amount of radio resources needed for the transmission of downlink control information. For example, the amount of radio resources for control signaling are halved. Furthermore, e.g., at the same time, embodiments allow for more detailed control information.

Many advantages of the present invention will be fully understood from the foregoing description, and it will be apparent that various changes may be made in the form, construction and arrangement of the units and devices without departing from the scope of the invention defined by the appended independent claims. Since the invention can be varied in many ways, it will be recognized that the invention should be limited only by the scope of the following claims.

## Claims

1. A method (300) of transmitting control information (510) in a radio network from a first station (1100) to a second station (1200), the control information being indicative of a plurality of parameters (512) for a radio communication involving at least the second station, the method comprising or triggering the steps of:
determining (302) an entry (702) of a table (520; 620) comprising a collection of entries, wherein the determined entry is indicative of at least one (512A) of the parameters of the control information; and
transmitting (304), to the second station, a reference (532) to the determined entry of the table and supplementary information (534), wherein the reference identifies or points to the determined one of the entries in the table, and wherein the determined entry and the supplementary information are jointly indicative of the plurality of parameters of the control information.

2. The method of claim 1, wherein the reference (532) to the entry (702) includes at least one of an index uniquely identifying the entry (702) in the table (520; 620) and a checksum of at least one of the entry (702) and the control information (510), optionally wherein the checksum is computed based on the plurality of parameters (512) of the control information (510).

3. The method of claim 1 or 2, further comprising or triggering the step of:
initializing or modifying an instance (620) of the table at the second station (1200) for consistency with an instance (520) of the table at the first station (1100), optionally wherein the table (620) is initialized or modified by radio resource control, RRC, signals transmitted to the second station (1200).

4. The method of any one of claims 1 to 3, wherein the table (520; 620) includes entries (702) each being indicative of at least one parameter (512) of previously transmitted control information, optionally wherein an entry (702) indicative of at least one parameter (512) of previously transmitted control information is at least one of
- entered into the table (520; 620) responsive to determining that the previously transmitted control information has been successfully received at the second station (1200); and
- deleted from the table (520; 620) upon expiry of a timer for the corresponding entry and/or if the entry (702) has not been used for a certain period of time.

5. The method of any one of claims 1 to 4, wherein the entry (702) is indicative of more bits of the control information (510) than the number of bits of the supplementary information (534), and/or wherein updated versions of the control information (510) are transmitted and wherein at least one parameter (512A) indicated by the entry (702) is updated less frequently than at least one parameter (512B) indicated by the supplementary information (534).

6. The method of any one of claims 1 to 5, wherein the supplementary information (534) is indicative of at least one of
- one or more parameters (512B) of the control information (510) other than the at least one parameter (512A) of which the entry (702) is indicative; and
- a modification of one or more parameters (512) of which the entry (702) is indicative.

7. The method of any one of claims 1 to 6, wherein at least one parameter (512) indicated by the entry (702) is indicative of at least one of a radio resource allocation, a modulation and coding scheme, an antenna configuration, a demodulation reference signal configuration and a transmission mode, and/or wherein at least one parameter (512) indicated by the supplementary information (534) is indicative of at least one of a packet sequence number, a redundancy version, a new data indicator, a power control command and a request for reporting channel state information.

8. The method of any one of claims 1 to 7, wherein the entry (702) is determined based on at least one parameter (512) of the entry matching the at least one parameter (512) of the control information (510), and/or wherein each entry (702) of the table (520; 620) is indicative of a combination of at least two different parameters (512).

9. The method of any one of claims 1 to 8, wherein the radio network includes a radio access network, RAN, optionally wherein the first station includes a base station of the RAN and the control information (510) includes downlink control information, DCI, transmitted by the base station; and/or wherein the second station (1200) includes a wireless station, optionally in a connected state with the RAN; and/or wherein at least one parameter (512) indicated by the entry (702) depends on at least one of a physical location of the second station (1200) and a channel condition of a channel used for the radio communication; and/or wherein different versions of the control information (510) are transmitted for each of multiple radio communications involving the second station (1200), optionally wherein at least one parameter (512) indicated by the supplementary information (534) is different for each of the multiple radio communications; and/or wherein at least one parameter (512) indicated by the entry (702) is equal for each of the multiple radio communications.

10. A method (400) of receiving control information (510) in a radio network from a first station (1100) at a second station (1200), the control information being indicative of a plurality of parameters (512) for a radio communication involving at least the second station, the method comprising or triggering the steps of:
receiving (402) a reference (532) to an entry (702) of a table (620; 520) and supplementary information (534), wherein the table (620; 520) comprises a collection of entries, wherein the reference identifies or points to the referenced one of the entries in the table, and wherein the referenced entry of the table is indicative of at least one (512A) of the parameters of the control information; and
determining (404) the plurality of parameters of the control information by combining the referenced entry with the supplementary information.

11. The method of claim 10, further comprising any feature or step corresponding to any of the features or steps of any one of claims 2 to 9.

12. A device (100) for transmitting control information (510) in a radio network from a first station (1100) to a second station (1200), the control information being indicative of a plurality of parameters (512) for a radio communication involving at least the second station, the device being configured to trigger or perform the steps of:
determining (302) an entry (702) of a table (520; 620) comprising a collection of entries, wherein the determined entry is indicative of at least one of the parameters of the control information; and
transmitting, to the second station, a reference (532) to the determined entry of the table and supplementary information (534), wherein the reference identifies or points to the determined one of the entries in the table, and wherein the determined entry and the supplementary information are jointly indicative of the plurality of parameters of the control information.

13. The device of claim 12, further configured to trigger or perform the steps of any one of embodiments 2 to 9.

14. A device (200) for receiving control information (510) in a radio network from a first station (1100) at a second station (1200), the control information being indicative of a plurality of parameters (512) for a radio communication involving at least the second station, the device being configured to trigger or perform the steps of:
receiving (402) a reference (532) to an entry (702) of a table (620; 520) and supplementary information (534), wherein the table (620; 520) comprises a collection of entries, wherein the reference identifies or points to the referenced one of the entries in the table, and wherein the referenced entry of the table is indicative of at least one of the parameters of the control information; and
determining (404) the plurality of parameters of the control information by combining the referenced entry with the supplementary information.

15. The device of claim 14, further configured to trigger or perform the steps of claim 11.

## Patentansprüche

1. Verfahren (300) zur Übermittlung von Steuerinformationen (510) in einem Funknetzwerk von einer ersten Station (1100) an eine zweite Station (1200), wobei die Steuerinformationen eine Vielzahl von Parametern (512) für eine Funkkommunikation angeben, die mindestens die zweite Station involviert, wobei das Verfahren die Schritte umfasst oder auslöst zum:
Ermitteln (302) eines Eintrags (702) einer Tabelle (520; 620), die eine Sammlung von Einträgen umfasst, wobei der ermittelte Eintrag mindestens einen (512A) der Parameter der Steuerinformationen angibt; und
Übermitteln (304), an die zweite Station, einer Referenz (532) zu dem ermittelten Eintrag der Tabelle und ergänzender Informationen (534), wobei die Referenz den ermittelten der Einträge in der Tabelle identifiziert oder darauf hinweist und wobei der ermittelte Eintrag und die ergänzenden Informationen gemeinsam die Vielzahl von Parametern der Steuerinformationen angeben.

2. Verfahren nach Anspruch 1, wobei die Referenz (532) zu dem Eintrag (702) mindestens eines von einem Index, der den Eintrag (702) in der Tabelle (520; 620) eindeutig identifiziert, und einer Prüfsumme mindestens eines der Einträge (702) und der Steuerinformationen (510) beinhaltet, optional wobei die Prüfsumme basierend auf der Vielzahl von Parametern (512) der Steuerinformationen (510) berechnet wird.

3. Verfahren nach Anspruch 1 oder 2, das weiter die Schritte umfasst oder auslöst zum:
Initialisieren oder Modifizieren einer Instanz (620) der Tabelle bei der zweiten Station (1200) für Konsistenz mit einer Instanz (520) der Tabelle bei der ersten Station (1100), optional wobei die Tabelle (620) von Funkressourcensteuerungs-, RRC (Radio Resource Control), -signalen initialisiert oder modifiziert wird, die an die zweite Station (1200) übermittelt werden.

4. Verfahren nach einem der Ansprüche 1 bis 3, wobei die Tabelle (520; 620) Einträge (702) beinhaltet, die jeweils mindestens einen Parameter (512) zuvor übertragener Steuerinformationen angeben, optional wobei ein Eintrag (702), der mindestens einen Parameter (512) zuvor übermittelter Steuerinformationen angibt, mindestens eines ist von
- in die Tabelle (520; 620) eingegeben, in Antwort darauf, dass ermittelt wurde, dass die zuvor übermittelten Steuerinformationen erfolgreich bei der zweiten Station (1200) empfangen wurden; und
- aus der Tabelle (520; 620) gelöscht, bei Ablauf eines Zeitgebers für den entsprechenden Eintrag und/oder falls der Eintrag (702) für eine gewisse Zeitdauer nicht verwendet wurde.

5. Verfahren nach einem der Ansprüche 1 bis 4, wobei der Eintrag (702) mehr Bits der Steuerinformationen (510) angibt als die Zahl von Bits der ergänzenden Informationen (534) und/oder wobei aktualisierte Versionen der Steuerinformationen (510) übermittelt werden und wobei mindestens ein Parameter (512A), der von dem Eintrag (702) angegeben ist, seltener als mindestens ein Parameter (512B) aktualisiert wird, der von den ergänzenden Informationen (534) angegeben wird.

6. Verfahren nach einem der Ansprüche 1 bis 5, wobei die ergänzenden Informationen (534) mindestens eines angeben von
- einem oder mehreren anderen Parametern (512B) der Steuerinformationen (510), außer dem mindestens einen Parameter (512A), den der Eintrag (702) angibt; und
- eine Modifikation eines oder mehrerer Parameter (512), die der Eintrag (702) angibt.

7. Verfahren nach einem der Ansprüche 1 bis 6, wobei mindestens ein Parameter (512), der von dem Eintrag (702) angegeben ist, mindestens eines einer Funkressourcenzuweisung, eines Modulations- und Codierungsschemas, einer Antennenkonfiguration, einer Demodulationsreferenzsignalkonfiguration und eines Übermittlungsmodus angibt und/oder wobei mindestens ein Parameter (512), der von den ergänzenden Informationen (534) angegeben ist, mindestens eines von einer Paketsequenznummer, einer Redundanzversion, einem Indikator für neue Daten, einem Leistungssteuerbefehl und einer Anfrage zum Melden von Kanalzustandsinformationen angibt.

8. Verfahren nach einem der Ansprüche 1 bis 7, wobei der Eintrag (702) basierend auf mindestens einem Parameter (512) des Eintrags ermittelt ist, der dem mindestens einen Parameter (512) der Steuerinformationen (510) entspricht, und/oder wobei jeder Eintrag (702) der Tabelle (520; 620) eine Kombination von mindestens zwei verschiedenen Parametern (512) angibt.

9. Verfahren nach einem der Ansprüche 1 bis 8, wobei das Funknetzwerk ein Funkzugriffsnetzwerk, RAN (Radio Access Network), beinhaltet, optional wobei die erste Station eine Basisstation des RAN beinhaltet und die Steuerinformationen (510) Downlink-Steuerinformationen, DCI (Downlink Control Information), beinhalten, die von der Basisstation übermittelt werden; und/oder wobei die zweite Station (1200) eine drahtlose Station beinhaltet, optional in einem verbundenen Zustand mit dem RAN; und/oder wobei mindestens ein Parameter (512), der von dem Eintrag (702) angegeben ist, von mindestens einem physischen Standort der zweiten Station (1200) und einem Kanalzustand eines Kanals, der für die Funkkommunikation verwendet wird, abhängt; und/oder wobei verschiedene Versionen der Steuerinformationen (510) für jede mehrerer Funkkommunikationen übermittelt werden, die die zweite Station (1200) involvieren, optional wobei mindestens ein Parameter (512), der von den ergänzenden Informationen (534) angegeben ist, für jede der mehreren Funkkommunikationen verschieden ist; und/oder wobei mindestens ein Parameter (512), der von dem Eintrag (702) angegeben ist, für jede der mehreren Funkkommunikationen gleich ist.

10. Verfahren (400) zum Empfangen von Steuerinformationen (510) in einem Funknetzwerk von einer ersten Station (1100) bei einer zweiten Station (1200), wobei die Steuerinformationen eine Vielzahl von Parametern (512) für eine Funkkommunikation angeben, die mindestens die zweite Station involviert, wobei das Verfahren die Schritte umfasst oder auslöst zum:
Empfangen (402) einer Referenz (532) zu einem Eintrag (702) einer Tabelle (620; 520) und ergänzender Informationen (534), wobei die Tabelle (630; 520) eine Sammlung von Einträgen umfasst, wobei die Referenz den referenzierten der Einträge in der Tabelle identifiziert oder darauf hinweist, und wobei der referenzierte Eintrag der Tabelle mindestens einen (512A) der Parameter der Steuerinformationen angibt; und
Ermitteln (404) der Vielzahl von Parametern der Steuerinformationen, indem der referenzierte Eintrag mit den ergänzenden Informationen kombiniert wird.

11. Verfahren nach Anspruch 10, weiter umfassend ein beliebiges Merkmal oder einen Schritt entsprechend einem beliebigen der Merkmale oder Schritte nach einem der Ansprüche 2 bis 9.

12. Vorrichtung (100) zum Übermitteln von Steuerinformationen (510) in einem Funknetzwerk von einer ersten Station (1100) an eine zweite Station (1200), wobei die Steuerinformationen eine Vielzahl von Parametern (512) für eine Funkkommunikation angeben, die mindestens die zweite Station involviert, wobei die Vorrichtung konfiguriert ist, die Schritte auszulösen oder durchzuführen zum:
Ermitteln (302) eines Eintrags (702) einer Tabelle (520; 620), die eine Sammlung von Einträgen umfasst, wobei der ermittelte Eintrag mindestens einen der Parameter der Steuerinformationen angibt; und
Übermitteln, an die zweite Station, einer Referenz (532) zu dem ermittelten Eintrag der Tabelle und ergänzender Informationen (534), wobei die Referenz den ermittelten der Einträge in der Tabelle identifiziert oder darauf hinweist und wobei der ermittelte Eintrag und die ergänzenden Informationen gemeinsam die Vielzahl von Parametern der Steuerinformationen angeben.

13. Vorrichtung nach Anspruch 12, weiter konfiguriert, die Schritte nach einer beliebigen der Ausführungsformen 2 bis 9 auszulösen oder durchzuführen.

14. Vorrichtung (200) zum Empfangen von Steuerinformationen (510) in einem Funknetzwerk von einer ersten Station (1100) bei einer zweiten Station (1200), wobei die Steuerinformationen eine Vielzahl von Parametern (512) für eine Funkkommunikation angeben, die mindestens die zweite Station involviert, wobei die Vorrichtung konfiguriert ist, die Schritte auszulösen oder durchzuführen zum:
Empfangen (402) einer Referenz (532) zu einem Eintrag (702) einer Tabelle (620; 520) und ergänzender Informationen (534), wobei die Tabelle (620; 520) eine Sammlung von Einträgen umfasst, wobei die Referenz den referenzierten der Einträge in der Tabelle identifiziert oder darauf hinweist und wobei der referenzierte Eintrag der Tabelle mindestens einen der Parameter der Steuerinformationen angibt; und
Ermitteln (404) der Vielzahl von Parametern der Steuerinformationen, indem der referenzierte Eintrag mit den ergänzenden Informationen kombiniert wird.

15. Vorrichtung nach Anspruch 14, weiter konfiguriert, die Schritte nach Anspruch 11 auszulösen oder durchzuführen.

## Revendications

1. Procédé (300) de transmission d'informations de commande (510) dans un réseau radio depuis une première station (1100) à une deuxième station (1200), les informations de commande étant indicatives d'une pluralité de paramètres (512) pour une radiocommunication impliquant au moins la deuxième station, le procédé comprenant ou déclenchant les étapes de :
la détermination (302) d'une entrée (702) d'une table (520 ; 620) comprenant un recueil d'entrées, dans lequel l'entrée déterminée est indicative d'au moins l'un (512A) parmi les paramètres des informations de commande ; et
la transmission (304), à la deuxième station, d'une référence (532) à l'entrée déterminée de la table et d'informations supplémentaires (534), dans lequel la référence identifie ou pointe vers l'une déterminée des entrées dans la table, et dans lequel l'entrée déterminée et les informations supplémentaires sont conjointement indicatives de la pluralité de paramètres des informations de commande.

2. Procédé selon la revendication 1, dans lequel la référence (532) à l'entrée (702) inclut au moins l'un parmi un indice identifiant de manière unique l'entrée (702) dans la table (520 ; 620) et une somme de contrôle d'au moins l'une parmi l'entrée (702) et les informations de commande (510), facultativement dans lequel la somme de contrôle est calculée sur la base de la pluralité de paramètres (512) des informations de commande (510).

3. Procédé selon la revendication 1 ou 2, en outre comprenant ou déclenchant l'étape de :
l'initialisation ou la modification d'une instance (620) de la table à la deuxième station (1200) pour qu'elle soit cohérente avec une instance (520) de la table à la première station (1100), facultativement dans lequel la table (620) est initialisée ou modifiée par des signaux de commande de ressource radio, RRC, transmis à la deuxième station (1200).

4. Procédé selon l'une quelconque des revendications 1 à 3, dans lequel la table (520 ; 620) inclut des entrées (702), chacune d'elles étant indicatives d'au moins un paramètre (512) d'informations de commande préalablement transmises, facultativement dans lequel une entrée (702) indicative d'au moins un paramètre (512) d'informations de commande préalablement transmises est au moins l'une parmi :
- entrée dans la table (520 ; 620) en réponse à la détermination que les informations de commande préalablement transmises ont été reçues avec succès à la deuxième station (1200) ; et
- supprimée de la table (520 ; 620) à l'expiration d'une minuterie pour l'entrée correspondante et/ou si l'entrée (702) n'a pas été utilisée pendant une certaine période de temps.

5. Procédé selon l'une quelconque des revendications 1 à 4, dans lequel l'entrée (702) est indicative de plus de bits des informations de commande (510) que le nombre de bits des informations supplémentaires (534), et/ou dans lequel des versions mises à jour des informations de commande (510) sont transmises et dans lequel au moins un paramètre (512A) indiqué par l'entrée (702) est mis à jour moins fréquemment qu'au moins un paramètre (512B) indiqué par les informations supplémentaires (534).

6. Procédé selon l'une quelconque des revendications 1 à 5, dans lequel les informations supplémentaires (534) sont indicatives d'au moins l'un parmi :
- un ou plusieurs paramètres (512B) parmi les informations de commande (510) autres que l'au moins un paramètre (512A) duquel l'entrée (702) est indicative ; et
- une modification d'un ou plusieurs paramètres (512) desquels l'entrée (702) est indicative.

7. Procédé selon l'une quelconque des revendications 1 à 6, dans lequel au moins un paramètre (512) indiqué par l'entrée (702) est indicatif d'au moins l'un parmi une allocation de ressource radio, un schéma de modulation et de codage, une configuration d'antenne, une configuration de signal de référence de démodulation et un mode de transmission, et/ou dans lequel au moins un paramètre (512) indiqué par les informations supplémentaires (534) est indicatif d'au moins l'un parmi un numéro de séquence de paquet, une version de redondance, un indicateur de nouvelles données, une commande de régulation de puissance et une demande de rapport d'informations d'état de canal.

8. Procédé selon l'une quelconque des revendications 1 à 7, dans lequel l'entrée (702) est déterminée sur la base d'au moins un paramètre (512) de l'entrée correspondant à l'au moins un paramètre (512) des informations de commande (510), et/ou dans lequel chaque entrée (702) de la table (520 ; 620) est indicative d'une combinaison d'au moins deux paramètres (512) différents.

9. Procédé selon l'une quelconque des revendications 1 à 8, dans lequel le réseau radio inclut un réseau d'accès radio, RAN, facultativement dans lequel la première station inclut une station de base du RAN et les informations de commande (510) incluent des informations de commande de liaison descendante, DCI, transmises par la station de base ; et/ou dans lequel la deuxième station (1200) inclut une station sans fil, facultativement dans un état connecté avec le RAN ; et/ou dans lequel au moins un paramètre (512) indiqué par l'entrée (702) dépend d'au moins l'un parmi un emplacement physique de la deuxième station (1200) et d'un état de canal d'un canal utilisé pour la radiocommunication ; et/ou dans lequel différentes version des informations de commande (510) sont transmises pour chacune de plusieurs radiocommunications impliquant la deuxième station (1200), facultativement dans lequel au moins un paramètre (512) indiqué par les informations supplémentaires (534) est différent pour chacune des plusieurs radiocommunications ; et/ou dans lequel au moins un paramètre (512) indiqué par l'entrée (702) est identique pour chacune des plusieurs radiocommunications.

10. Procédé (400) de réception d'informations de commande (510) dans un réseau radio depuis une première station (1100) au niveau d'une deuxième station (1200), les informations de commande étant indicatives d'une pluralité de paramètres (512) pour une radiocommunication impliquant au moins la deuxième station, le procédé comprenant ou déclenchant les étapes de :
la réception (402) d'une référence (532) à une entrée (702) d'une table (620 ; 520) et d'informations supplémentaires (534), dans lequel la table (620 ; 520) comprend un recueil d'entrées, dans lequel la référence identifie ou pointe vers l'une référencée des entrées dans la table, et dans lequel l'entrée référencée de la table est indicative d'au moins l'un (512A) parmi les paramètres des informations de commande ; et
la détermination (404) de la pluralité de paramètres des informations de commande par la combinaison de l'entrée référencée avec les informations supplémentaires.

11. Procédé selon la revendication 10, comprenant en outre toute caractéristique ou étape correspondant à l'une quelconque des caractéristiques ou étapes selon l'une quelconque des revendications 2 à 9.

12. Dispositif (100) de transmission d'informations de commande (510) dans un réseau radio depuis une première station (1100) à une deuxième station (1200), les informations de commande étant indicatives d'une pluralité de paramètres (512) pour une radiocommunication impliquant au moins la deuxième station, le dispositif étant configuré pour déclencher ou réaliser les étapes de :
la détermination (302) d'une entrée (702) d'une table (520 ; 620) comprenant un recueil d'entrées, dans lequel l'entrée déterminée est indicative d'au moins l'un des paramètres des informations de commande ; et
la transmission, à la deuxième station, d'une référence (532) à l'entrée déterminée de la table et d'informations supplémentaires (534), dans lequel la référence identifie ou pointe vers l'une déterminée des entrées dans la table, et dans lequel l'entrée déterminée et les informations supplémentaires sont conjointement indicatives de la pluralité de paramètres des informations de commande.

13. Dispositif selon la revendication 12, configuré en outre pour déclencher ou réaliser les étapes selon l'une quelconque des revendications 2 à 9.

14. Dispositif (200) de réception d'informations de commande (510) dans un réseau radio depuis une première station (1100) au niveau d'une deuxième station (1200), les informations de commande étant indicatives d'une pluralité de paramètres (512) pour une radiocommunication impliquant au moins la deuxième station, le dispositif étant configuré pour déclencher ou réaliser les étapes de :
la réception (402) d'une référence (532) à une entrée (702) d'une table (620 ; 520) et d'informations supplémentaires (534), dans lequel la table (620 ; 520) comprend un recueil d'entrées, dans lequel la référence identifie ou pointe vers l'une référencée des entrées dans la table, et dans lequel l'entrée référencée de la table est indicative d'au moins l'un parmi les paramètres des informations de commande ; et
la détermination (404) de la pluralité de paramètres des informations de commande par la combinaison de l'entrée référencée avec les informations supplémentaires.

15. Dispositif selon la revendication 14, configuré en outre pour déclencher ou réaliser les étapes selon la revendication 11.
